(19) Europäisches Patentamt
European Patent Office
Office européen des brevets

(11) EP 4 556 348 A1

(12) EUROPEAN PATENT APPLICATION

(43) Date of publication:
21.05.2025 Bulletin 2025/21

(51) International Patent Classification (IPC):
B62D 15/02 (2006.01)    B62D 6/00 (2006.01)

(21) Application number: 23209606.5

(22) Date of filing: 14.11.2023

(52) Cooperative Patent Classification (CPC):
B62D 15/025; B62D 6/003

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: CARIAD SE
38440 Wolfsburg (DE)

(72) Inventors:
• D Phan, Huu-Thanh
  75177 Pforzheim (DE)
• Gerger, Ozan
  70173 Stuttgart (DE)
• Bauer, Kai-Lukas
  71706 Markgröningen (DE)

(74) Representative: Bals & Vogel Patentanwälte
PartGmbB
Konrad-Zuse-Str. 4
44801 Bochum (DE)

(54) **METHODS FOR PROVIDING A SIDE SLIP ANGLE CORRECTION AND FOR AT LEAST PARTIALLY AUTOMATICALLY STEERING A VEHICLE, COMPUTER PROGRAM PRODUCT, COMPUTER-READABLE STORAGE MEDIUM AND VEHICLE**

(57)    The invention relates to a method (100) for providing a side slip angle correction to be provided for at least partially automatically steering a vehicle (300), comprising:
- providing (110) a vehicle model that is configured to process a yaw rate, a velocity and at least one inertial property of the vehicle (300) as input values,
- obtaining (120) a steady state solution of the vehicle model,
- determining (130) the side slip angle as an output value from the vehicle model in the steady state,
- outputting (140) the side slip angle for a at least partially steering the vehicle (300).

The invention further relates to a method (200) for at least partially automatically steering a vehicle (300), a computer program product, a computer-readable storage medium and a vehicle (300).

Fig. 2

**Description**

The invention relates to a method for providing a side slip angle correction, a method for at least partially automatically steering a vehicle, a computer program product, a computer-readable storage medium, and a vehicle.

Lane centring for vehicles is a helpful feature which can enhance safety, improve convenience and the overall driving experience. Lane centring can help prevent accidents caused by unintentional lane departures. By continuously monitoring the vehicle's position within the lane and making small steering adjustments when necessary, it can help keep the vehicle in the centre of the lane, reducing the risk of collisions with other vehicles or objects on the road. Further, the need for steering inputs by the driver can be reduced, which can help reduce driver fatigue and increase alertness during long journeys. Thereby, the comfort for the driver and passengers is improved.

A method for lane centring can also be a part of a broader suite of Advanced Driver Assistance Systems (ADAS) features, including adaptive cruise control, automatic emergency braking, and blind-spot monitoring. When integrated with these systems, it can contribute to a more comprehensive safety package.

However, presently known methods for lane centring, such as disclosed in EP 0 446 903 B1, US 8,160,780 B2 or US 11,364,895 B2, either rely on comparably expensive sensors like a six dimension inertia sensor and/or are not reliable, in particular at higher velocities. This means that present sensors can only be used at slow velocities, for example in a traffic jam situation. Further, the methods are presently exclusive to high end vehicles.

It is therefore a problem of the present invention to at least partially overcome at least one of the disadvantages described above. In particular, it is a problem of the invention to provide a method for providing a side slip angle correction, a method for at least partially automatically steering a vehicle, a computer program product, a computer readable storage medium as well as a vehicle that enable lane centring at various, in particular high velocities without the need for expensive sensors, which is robust for a wide range of vehicles.

The above problem is solved by a method having the features of independent patent claim 1, by a method having the features of independent patent claim 7, by a computer program product having the features of independent patent claim 8, by a computer-readable storage medium having the features of independent patent claim 9, and by a vehicle having the features of independent patent claim 10. Further features and details of the invention result from the dependent claims, the description and the drawings. Features and details described in connection with the method for providing a side slip angle correction according to the invention naturally also apply in connection with the method for at least partially automatically steering a vehicle according to the invention and/or in connection with the computer program product according to the invention and/or in connection with the computer-readable storage medium according to the invention and/or in connection with the vehicle according to the invention and vice versa in each case, so that reference is or can always be made mutually with regard to the disclosure concerning the individual aspects of the invention.

According to the invention, a method for providing a side slip angle correction to be provided for at least partially automatically steering a vehicle, is provided, comprising:

- providing a vehicle model that is configured to process a yaw rate, a velocity and at least one inertial property of the vehicle as input values,
- obtaining a steady state solution of the vehicle model,
- determining the side slip angle as an output value from the vehicle model in the steady state,
- outputting the side slip angle for at least partially automatically steering the vehicle.

In other words, a process for deriving a side slip angle of a vehicle for controlling the vehicle's path can be provided, wherein the side slip angle is determined through a algorithmic representation of the vehicle, wherein a yaw rate of the vehicle, a velocity of the vehicle and at least one inertia property of the vehicle serve as inputs of the algorithmic representation. The algorithmic representation is solved for the side slip angle in a steady state condition and the corresponding side slip angle is output as a value that can be used for controlling and/or correcting the vehicle's path.

The inertial property may be an inertial moment. Further, it may be provided that the vehicle model processes at least to inertial properties. This results in an improvement of the accuracy of the model. In particular, one inertial property may be the inertial moment of the z-axis ($I_z$) and another inertial property may be the mass of the vehicle (m).

The method may be implemented as a computer-implemented method.

The method steps can run at least partially simultaneously and/or sequentially in time, wherein the sequence of the method steps is not limited by the specified sequence, so that individual steps can be carried out in different sequences. Furthermore, individual or all steps can be carried out repeatedly.

A side slip angle correction can be considered as a control strategy to address or mitigate a condition known as "side slip" or "drift". A Side slip may occur when a vehicle's actual direction of travel differs from the direction in which it is pointed or oriented, resulting in a skidding or sliding motion. Side slip correction aims to bring the vehicle's direction of travel more in line with its orientation and/or to improve stability and handling. In particular, a side slip may prevent the vehicle from being centred on a defined path of a steering system.

In connection with this invention, steering a vehicle can be understood as the process of controlling the direction in which a vehicle moves by manipulating inputs configured to steering the vehicle. These inputs for steering can be manual inputs, such as inputs on a steering wheel or yoke, or at least partially automatic inputs, which can be calculated and/or determined by a computing unit.

A vehicle according to the invention can be a motor vehicle. In principle, a motor vehicle can be any type of motor-driven vehicle. The vehicle can be a land vehicle, a water vehicle or an air vehicle. In particular, the motor vehicle may be a passenger car or truck. The vehicle may further comprise an internal combustion engine and/or an electric motor. It may also be provided that the vehicle is exclusively electrically driven. It can be further provided that the vehicle can drive at least partially automatically with reduced or no driver inputs. Also, the vehicle may be configured to be steered by multiple axes.

A vehicle model can be considered as a mathematical representation and/or simulation of a vehicle's behaviour and dynamics, including at least one algorithm and/or equation. It can be configured to capture the characteristics of how a vehicle moves and responds to inputs and/or external factors. In particular, the vehicle model can be a machine learned model. As an alternative, the vehicle model can be configured as a set of equations. This provides the advantage that the processes within the model can be checked and, if necessary, easily adjusted.

In particular, the vehicle model may be in the form of

$$\dot{x} = A(v)x + B(v)\delta,$$

wherein x is the vehicles position and $\dot{x}$ the derivative of x with respect to time. x may be representing a vector [x] = [β,ω], wherein β is the side slip angle and ω is the yaw rate. "A" and "B" may be factors depending at least on the velocity of the vehicle. $\delta$ can be the angle $[\delta_f, \delta_r]$ of a wheel.

"A" can be defined as a cornering stiffness factor, in particular as

$$A = \begin{bmatrix} -\dfrac{2(C_r+C_f)}{mv} & \dfrac{2(l_rC_r-l_fC_f)}{mv^2}-1 \\ \dfrac{2(l_rC_r-l_fC_f)}{I_z} & -\dfrac{\left(l_r^2C_r+l_f^2C_f\right)}{I_zv} \end{bmatrix},$$

wherein $C_f$ and $C_r$ are the cornering stiffnesses for the front (f) and rear (r) tyres (in Newton), m is the mass of the vehicle, v is the velocity of the vehicle, $I_r$ and $I_f$ is the distances from central of gravity to axles and $I_z$ is the yaw moment of inertia. $C_r$ and $C_f$ can be scaled proportional to the mass using a dynamic mass estimation, in particular a dynamic resistance estimation. The dynamic estimation has the advantage of being more accurate than an estimation that is constant over time.

"B" can be defined as an input vector for steering, in particular as

$$B = \begin{bmatrix} -\dfrac{2(C_f)}{mv} & \dfrac{2(C_r)}{mv} \\ \dfrac{(2l_fC_f)}{I_z} & -\dfrac{2(l_rC_r)}{I_z} \end{bmatrix}.$$

A velocity of a vehicle can be a vector quantity that describes the rate of change of the vehicle's position with respect to time. In other terms, velocity determines how fast the car is moving and in which direction it is moving. Velocity may provide both a magnitude (speed) and a direction.

A yaw rate, may be conceived as a measure of how quickly a vehicle is rotating around its vertical (Z) axis, which may be aligned with the vehicle's centreline. In other terms, it quantifies the rate of angular rotation or the rate at which a vehicle is turning or changing its direction.

A yaw moment of inertia may refer to a measure of a vehicle's resistance to rotational motion around an axis, in particular its vertical axis. The moment of inertia may depend on the object's mass and/or on how the mass is distributed relative to the axis of rotation.

The side slip angle β may be determined from the vehicle model in the steady state, wherein in particular

$$\beta = g_{f/r}(V)\delta_{f/r},$$

wherein g is a transfer function. The transfer function may be defined as

$$g_f(v) = \frac{2\left(2l_r^2C_r+2l_fl_rC_r-mv^2l_f\right)C_f}{4(l_f+l_r)^2C_fC_r+2mv^2\left(l_rC_r-l_fC_f\right)},$$

and/or

$$g_r(v) = \frac{2\left(2l_f^2C_f+2l_fl_rC_f-mv^2l_r\right)C_r}{4(l_f+l_r)^2C_fC_r+2mv^2\left(l_rC_r-l_fC_f\right)}.$$

A small angle assumption may be used. This has the advantage of further reducing the computational cost of the model. In particular,

$$\tan\left(\delta_{f/r}\right) = \frac{L}{R} \approx \delta_{\underset{r}{f}},$$

with L as the distance between a front axis and a rear axis and R as a current turning radius. Thus, the side slip angle from the vehicle model in the steady state may be de-

termined with

$$\beta = g(V)\frac{L}{R}.$$

It can be provided that the inertia moment is provided by an inertia sensor. The inertia sensor may be configured to have up to three axes and/or to measure acceleration and/or angular velocity. In particular, the axes may be an X, Y and/or Z axis. The X-axis may represent the motion in the horizontal plane along the longitudinal axis of the sensor. The Y-axis may represent the motion in the horizontal plane along the lateral axis of the sensor. The Z-axis may represent the motion in the vertical plane along the sensor's vertical axis. It may also be called the "yaw" axis.

The inertia sensor may comprise an accelerometer and/or a gyroscope. An accelerometer can measure a, in particular linear, acceleration along one or more axes (in particular the X, Y, and Z-axes mentioned above). It does this by detecting the force exerted on a small mass within the sensor due to acceleration. A gyroscope can measure an angular velocity, which is the rate of change of orientation or rotation along the sensor's axes. A gyroscope may measure this change in axis orientation to determine the rate of rotation. It may provide measurements along the X, Y, and Z axes as mentioned above. It may be provided that the measurements from the accelerometer and gyroscope are combined, thereby obtaining information about the sensor's motion and orientation in three-dimensional space.

Input values can also be denoted as "domain" of a function. Input values can be the set of values or arguments that can be plugged into the function to produce an output. The output of a function may be referred to as the "range" or "codomain" of the function.

Obtaining a steady-state solution of a function may include finding a solution where the function's behaviour remains constant over time and/or there is no change in its dependent variables. A steady-state solution can be a condition in a dynamic system where variables remain constant over time. In other words, in a steady state (e.g. dx/dt = 0), the system has reached a stable equilibrium where there is no net change in the output values of specific variables.

An output value, which may also be referred to as the "function's value" or "function's output," can be the response produced when at least one input value is input to the function. In mathematical terms, it is the value that the function assigns to its input, also known as the "dependent variable". It can be provided that the vehicle model is configured to always provide the same output value if the same input value is input. In other words, the vehicle model may be non-random or deterministic. Deterministic models are often simpler and more transparent than, e.g. machine learning models. It may be easier to understand and explain how deterministic models work because they are based on explicit mathematical equations.

Outputting can comprise to provide a, in particular digital, value that can be input in a function that is configured for steering the vehicle. In other words, the output may represent a control signal that can be used by a steering function for steering the vehicle.

In summary, the method according to the invention provides the advantage that lane centring at various, in particular high velocities is enabled without the need for expensive sensors. Further, the side slip angle can be determined in a robust way for a wide range of vehicles. A vehicle model that is configured to process a yaw rate, a velocity and at least one inertial property, is sufficiently simple in order to be solved in real-time and has the advantage of being capable of being tuned to specific needs of a variety of vehicles. Obtaining a steady state solution has the advantage of reducing the computational workload. Finally, the side slip angle can be used to improve the accuracy of steering the vehicle at least partially automatically, in particular at high velocities.

In the context of the invention, it may be advantageous that the vehicle model comprises a heading correction, wherein the heading correction comprises at least the yaw rate and the side slip angle as input value. A heading correction has the advantage that the motion planning by a steering function is further supported and the predictive control becomes more accurate. In particular, the heading correction can be in the form of

$$\psi_c = \psi + \beta.$$

The heading correction can be output for at least partially automatically steering the vehicle, in particular separately from the side slip angle.

Within the scope of the invention, it is conceivable that the vehicle model comprises a yaw rate state correction, wherein the yaw rate state comprises at least the change of side slip angle as input value. This way, the initial vehicle state can be further corrected and a more accurate and robust steering of the vehicle can be obtained. In particular, the heading correction can be in the form of

$$\omega_c = \omega + \dot{\beta}.$$

The yaw rate state correction can be output for at least partially automatically steering the vehicle, in particular separately from the side slip angle and/or the heading correction.

It may be provided in the context of the invention that a vehicle model comprises a curvature correction, wherein the curvature correction comprises at least a change over time in yaw rate as input parameter and/or wherein the curvature correction comprises at least the estimated side slip angle and a weight distribution factor that is specific for the vehicle. The curvature correction improves the steering accuracy in particular in critical scenarios where the vehicle is accelerated in a curve. In particular, the curvature correction can be in the form of

$$\kappa_1 = \frac{\dot{\beta}}{v} g(v),$$

wherein g is a transfer function depending on the velocity of the vehicle. Alternatively, the curvature correction can comprise at least the estimated side slip angle and a weight distribution factor, so that the curvature correction can be in the form of

$$\kappa_2 = \beta K(v) C,$$

wherein K(v) is a weight distribution factor and C is a cornering stiffness factor. This curvature correction compensates for different vehicles as well as for the steady state side slip. C may have the form of

$$C = \frac{C_r L_r - C_f L_f}{C_f L_f^2 + C_r C_r^2}.$$

Both curvature corrections can be used individually or in combination, in particular in the form of

$$\kappa_{total} = \kappa_1 + \kappa_2.$$

The curvature correction can be output for at least partially automatically steering the vehicle, in particular separately from the side slip angle and/or the heading correction and/or the yaw rate state correction.

It is also conceivable that curvature correction and/or the side slip angle and/or the heading correction and/or the yaw rate state correction are output as a combined correction vector. This provides the advantage that a function for at least partially automatically steering a vehicle may have a single quantity transmitted at the same time, so that requirements for synchronization are eliminated or at least reduced, so that the accuracy of the steering can be improved and the computing power required for this can be reduced.

It is also conceivable that the curvature compensation is provided in a feedforward loop and/or a feedback loop to the vehicle model. This way, disturbances due to external forces, such as lateral wind, can be isolated and separated from the errors resulting from the side slip angle.

It is also conceivable that the side slip angle is provided for the front axis and/or rear axis or the side slip angle is provided for each wheel individually. This way, the accuracy can be improved, in particular for individual side slip angles, and/or the computational power that is required can be reduced. This also applies for the curvature correction and/or the heading correction and/or the yaw rate state correction.

The above problem is further solved by a method for at least partially automatically steering a vehicle, wherein at least a side slip angle is determined with the inventive method and used as a correction in order to keep the vehicle on a determined path, in particular in the centre of a lane.

Thus, the same advantages arise with respect to a method for at least partially automatically steering a vehicle as have already been described with respect to the method for providing a side slip angle correction.

It is further conceivable that the method for at least partially automatically steering a vehicle uses a curvature correction and/or a heading correction and/or a yaw rate state correction as determined through the inventive method.

The above problem is further solved by a computer program product, comprising instructions which, when the program is executed by a computer, cause the computer to carry out the inventive method for providing a side slip angle correction and/or for at least partially automatically steering a vehicle.

Thus, the same advantages arise with respect to a computer program product according to the invention as have already been described with respect to the methods according to the invention.

The above problem is further solved by a computer-readable storage medium comprising instructions which, when executed by a computer, cause the computer to carry out the inventive methods.

Thus, the same advantages arise with respect to a computer-readable storage medium according to the invention as have already been described with respect to the methods and/or computer program product according to the invention.

The above problem is further solved by a vehicle according to the invention, which is steered at least partially automatically with an inventive method and/or comprising a steering unit that runs an inventive computer progam product.

Thus, the same advantages result with respect to a vehicle according to the invention as have already been described with respect to the methods according to the invention and/or a computer program product according to the invention and/or a computer-readable storage medium according to the invention.

Further advantages, features and details of the invention will be apparent from the following description, in which several embodiments of the invention are described in detail with reference to the drawings. In this connection, the features mentioned in the claims and in the description may each be essential to the invention individually or in any combination.

Fig. 1    shows methods according to the invention,

Fig. 2    shows estimation results of the side slip angle according to the invention,

Fig. 3    shows results of the side slip angle as in the prior art,

Fig. 4      shows a vehicle from above, and

Fig. 5      shows a vehicle according to the invention.

In the following figures, the identical reference signs are used for the same technical features, even of different embodiment examples.

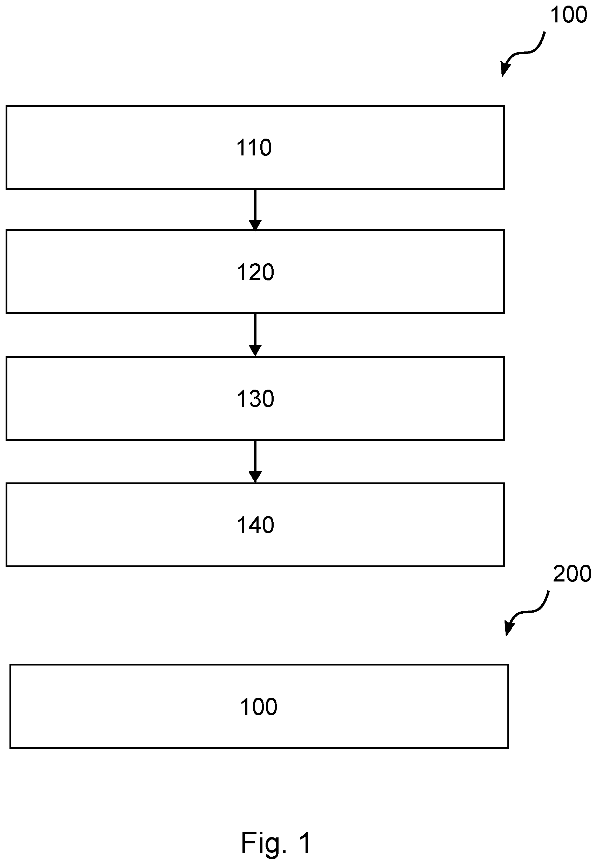

Fig. 1 shows a method 100 for providing a side slip angle correction to be provided for at least partially automatically steering a vehicle 300, comprising:

- providing 110 a vehicle model that is configured to process a yaw rate, a velocity and at least one inertia moment of the vehicle 300 as input values,
- obtaining 120 a steady state solution of the vehicle model,
- determining 130 the side slip angle as an output value from the vehicle model in the steady state,
- outputting 140 the side slip angle for a at least partially steering the vehicle 300.

In summary, the method 100 according to the invention provides the advantage that lane centring at various, in particular high velocities is enabled without the need for expensive sensors. Further, the side slip angle can be determined in a robust way for a wide range of vehicles 300. A vehicle 300 model that is configured to process a yaw rate, a velocity and at least one inertia moment is sufficiently simple in order to be solved in real-time and has the advantage of being capable of being tuned to specific needs of a variety of vehicles 300. Obtaining 120 a steady state solution has the advantage of reducing the computational workload. Finally, the side slip angle can be used to improve the accuracy of steering the vehicle 300 at least partially automatically, in particular at high velocities.

Fig.1 also shows a Method 200 for at least partially automatically steering a vehicle 300, wherein at least a side slip angle is determined with a method 100 according to one of the previous claims and used as a correction in order to keep the vehicle on a determined path, in particular in the centre of a lane.

Thus, the same advantages arise with respect to a method 200 for at least partially automatically steering a vehicle as have already been described with respect to the method 100 for providing a side slip angle correction.

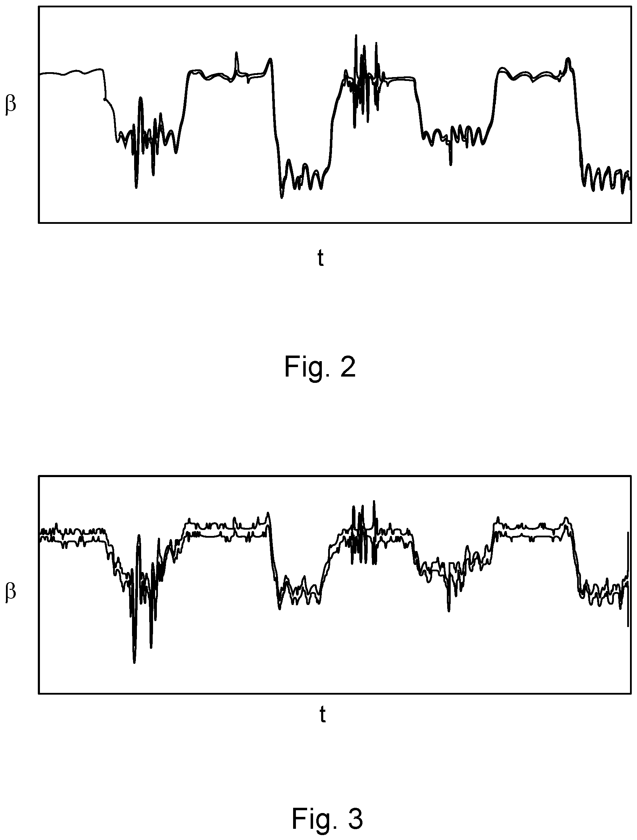

Fig 2 shows estimated results of the side slip angle according to the present invention.

Below, Fig. 3 shows side slip angles as measured with expensive tools according to the prior art. As can be seen, the side slip angle obtained with the method 100 is very accurate, yet can be obtained with much less expensive hardware.

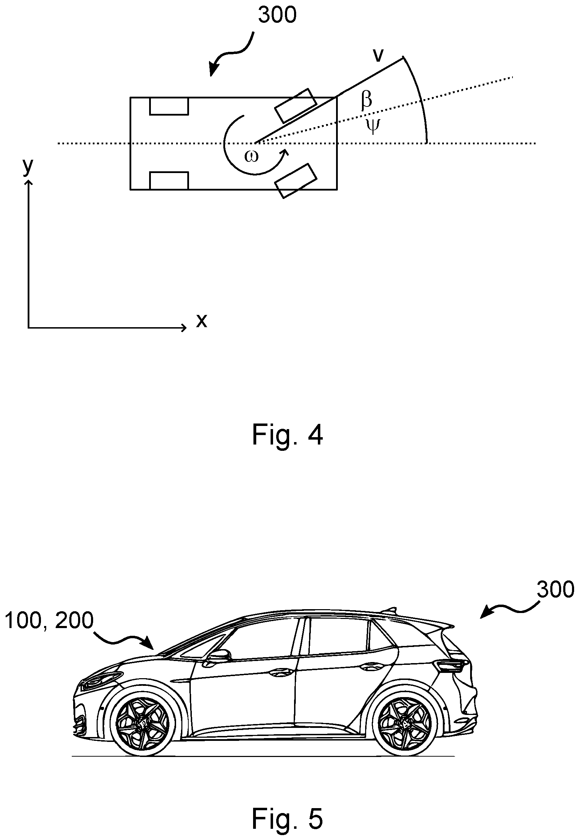

Fig. 4 shows a vehicle 300 from above depicting a coordinate system with an x, y and z (towards the viewer) axis. The vehicle has 4 wheels on two axes. The velocity v vector ($v = \dot{x}$) points in the direction of the yaw angle (or heading) and the side slip, turning at a rate $\omega$ around the z-axis.

Fig. 5 shows a vehicle 300 according to the invention, which is steered at least partially automatically with an inventive method and/or comprising a steering unit that runs an inventive computer progam product.

The foregoing explanation of embodiments describes the present invention solely in the context of examples. Of course, individual features of the embodiments may be freely combined with each other, if technically useful, without departing from the scope of the present invention.

**List of reference signs**

| 100 | method for providing a side slip angle correction |
|---|---|
| 110 | providing |
| 120 | obtaining |
| 130 | determining |
| 140 | outputting |
| 200 | method for at least partially steering a vehicle |
| 300 | vehicle |

**Claims**

1. Method (100) for providing a side slip angle correction to be provided for at least partially automatically steering a vehicle (300), comprising:

   - providing (110) a vehicle model that is configured to process a yaw rate, a velocity and at least one inertial property of the vehicle (300) as input values,
   - obtaining (120) a steady state solution of the vehicle model,
   - determining (130) the side slip angle as an output value from the vehicle model in the steady state,
   - outputting (140) the side slip angle for a at least partially steering the vehicle (300).

2. Method (100) according to claim 1,
   **wherein**
   the vehicle model comprises a heading correction, wherein the heading correction comprises at least the yaw rate and the side slip angle as input value.

3. Method (100) according to claim 1 or 2,
   **wherein**
   the vehicle model comprises a yaw rate state correction, wherein the yaw rate state comprises at least the change of side slip angle as input value.

**4.** Method (100) according to one of the previous claims,
**wherein**
the vehicle model comprises a curvature correction, wherein the curvature correction comprises at least a change over time in yaw rate as input parameter and/or wherein the curvature correction comprises at least the estimated side slip angle and a weight distribution factor that is specific for the vehicle (300).

**5.** Method (100) according to one of the previous claims,
**wherein**
the curvature compensation is provided in a feedforward loop and/or a feedback loop to the vehicle model.

**6.** Method (100) according to one of the previous claims,
**wherein**
the side slip angle is provided for the front axis and/or rear axis or the side slip angle is provided for each wheel individually.

**7.** Method (200) for at least partially automatically steering a vehicle (300), wherein at least a side slip angle is determined with a method (100) according to one of the previous claims and used as a correction in order to keep the vehicle on a determined path, in particular in the centre of a lane.

**8.** Computer program product, comprising instructions which, when the program is executed by a computer, cause the computer to carry out a method (100) for providing a side slip angle correction according to one of claims 1 to 6 and/or for at least partially automatically steering a vehicle according the method of claim 7.

**9.** Computer-readable storage medium comprising instructions which, when executed by a computer, cause the computer to carry out a method (100) according to one of claims 1 to 6 and/or a method according to claim 7.

**10.** Vehicle (300), which is steered at least partially with a method (100) according to claim 7 and/or comprising a steering unit that runs a computer program product according to claim 8.

100

| 110 |
|:---:|

| 120 |
|:---:|

| 130 |
|:---:|

| 140 |
|:---:|

200

| 100 |
|:---:|

Fig. 1

Fig. 2

Fig. 3

Fig. 4

Fig. 5

## EUROPEAN SEARCH REPORT

Europäisches
Patentamt
European
Patent Office
Office européen
des brevets

Application Number

EP 23 20 9606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 534 121 A (UNIV JILIN) 4 August 2023 (2023-08-04) | 1-5,8-10 | INV. B62D15/02 |
| Y | * paragraph [0002] – paragraph [0090]; | 7 | B62D6/00 |
| A | claims 1-4; figure B60W30/045 * | 6 | |
| | ----- | | |
| X | MILANI SINA ET AL: "Smart Autodriver Algorithm for Real-Time Autonomous Vehicle Trajectory Control", IEEE TRANSACTIONS ON INTELLIGENT TRANSPORTATION SYSTEMS, IEEE, PISCATAWAY, NJ, USA, vol. 23, no. 3, 21 October 2020 (2020-10-21), pages 1984-1995, XP011902505, ISSN: 1524-9050, DOI: 10.1109/TITS.2020.3030236 [retrieved on 2022-03-09] | 1-6,8-10 | |
| Y | * page 1985, column 1, line 1 – page 1991, column 1, line 2; figures 1-7 * | 7 | |
| | ----- | | |
| X | ANWAR S ED – ANONYMOUS: "Predictive Yaw Stability Control of a Brake-By-Wire Equipped Vehicle via Eddy Current Braking", AMERICAN CONTROL CONFERENCE, 2007. ACC '07, IEEE, PISCATAWAY, NJ, USA, 9 July 2007 (2007-07-09), pages 2308-2313, XP031215373, ISBN: 978-1-4244-0988-4 | 1-5,8-10 | TECHNICAL FIELDS SEARCHED (IPC) B62D |
| Y | * page 2308, column 1, line 1 – page 2311, | 7 | |
| A | column 2, line 11 * | 6 | |
| | ----- | | |
| | -/-- | | |

The present search report has been drawn up for all claims

| Place of search | Date of completion of the search | Examiner |
|---|---|---|
| The Hague | 28 April 2024 | Signorini, Luca |

EPO FORM 1503 03.82 (P04C01)

Europäisches
Patentamt

European
Patent Office

Office européen
des brevets

# EUROPEAN SEARCH REPORT

Application Number

EP 23 20 9606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIZHENG LIU ET AL: "Sideslip angle estimation of ground vehicles: a comparative study", IET CONTROL THEORY AND APPLICATIONS, THE INSTITUTION OF ENGINEERING AND TECHNOLOGY, GB, vol. 14, no. 20, 12 March 2021 (2021-03-12), pages 3490-3505, XP006105829, ISSN: 1751-8644, DOI: 10.1049/IET-CTA.2020.0516 | 1-6,8-10 | |
| Y | * the whole document * | 7 | |
| Y | US 5 243 524 A (ISHIDA SHINNOSUKE [JP] ET AL) 7 September 1993 (1993-09-07) * column 2, line 22 - column 7, line 37; figures 1-13 * | 7 | |
| Y | US 2009/248250 A1 (YASUI YOSHIYUKI [JP] ET AL) 1 October 2009 (2009-10-01) * paragraph [0041] - paragraph [0092] * * paragraph [0136] - paragraph [0016]; figures 1-24 * | 7 | **TECHNICAL FIELDS SEARCHED (IPC)** |
| A | US 2013/261899 A1 (KLIER WILLY J [US]) 3 October 2013 (2013-10-03) * the whole document * | 1-10 | |

The present search report has been drawn up for all claims

| Place of search | Date of completion of the search | Examiner |
|---|---|---|
| The Hague | 28 April 2024 | Signorini, Luca |

EPO FORM 1503 03.82 (P04C01)

## ANNEX TO THE EUROPEAN SEARCH REPORT
## ON EUROPEAN PATENT APPLICATION NO.

**EP 23 20 9606**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-04-2024**

| Patent document cited in search report | | Publication date | Patent family member(s) | | Publication date |
|---|---|---|---|---|---|
| CN 116534121 | A | 04-08-2023 | NONE | | |
| US 5243524 | A | 07-09-1993 | DE | 69120443 T2 | 24-10-1996 |
| | | | EP | 0446903 A2 | 18-09-1991 |
| | | | JP | 2844240 B2 | 06-01-1999 |
| | | | JP | H03265008 A | 26-11-1991 |
| | | | US | 5243524 A | 07-09-1993 |
| US 2009248250 | A1 | 01-10-2009 | DE | 102009012857 A1 | 15-10-2009 |
| | | | US | 2009248250 A1 | 01-10-2009 |
| US 2013261899 | A1 | 03-10-2013 | EP | 2830928 A1 | 04-02-2015 |
| | | | JP | 6106261 B2 | 29-03-2017 |
| | | | JP | 2015514037 A | 18-05-2015 |
| | | | US | 2013261899 A1 | 03-10-2013 |
| | | | WO | 2013148844 A1 | 03-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0446903 B1
- US 8160780 B2
- US 11364895 B2